# EUROPEAN PATENT APPLICATION

(11) **EP 1 465 114 A2**
(43) Date of publication of application: **06.10.2004**
(21) Application number: 04008016.0
(22) Date of filing: 01.04.2004
(51) Int. Cl.: G06T 11/20

(54) **Progressive scale graph**

(30) Priority: 01.04.2003 US 404189
(71) Applicant: MICROSOFT CORPORATION, Redmond, Washington 98052 (US)
(72) Inventor: Guzik, Greg, Redmond Washington 98052 (US)
(74) Representative: Grünecker, Kinkeldey, Stockmair & Schwanhäusser Anwaltssozietät

(57) **Abstract**

Graphical presentation of data responds to changes in the range of a value in the data set being graphed by dynamically changing the range on the axis by which the value is represented. As the range of a value changes over time (increasing or decreasing), the range of the axis and its endpoints also dynamically change and the data displayed is redrawn. The granularity of the scale is also dynamically adjusted as the range changes, affecting the legend on the graph and/or the reference lines drawn on the graph, however, the granularity changes only as needed, and so the legend and reference lines allow the viewer to understand the dynamic changes in the scale of the graph.

## Description

### FIELD OF THE INVENTION

This invention relates to the graphical display of data. More particularly, this invention relates to displaying data which is updated over time.

### BACKGROUND OF THE INVENTION

Graphs are often used to display data for a user. For example, a two-dimensional graph may be used to show data consisting of ordered pairs of variables. Each axis represents a range of possible values of the variables.

One problem with graphs is encountered in selecting the range to display on each axis. For example, if the possible range of values to be graphed includes X values ranging from 0 to 800, the range of the X axis should be 0 to 800.

However, if the values actually present on the graph range only from 0 to 50, the graph may be less than legible when graphed with an X axis ranging from 0 to 800. This may occur in a situation where data is continually being added at one end of the current range of data values. For example, where data is continually being calculated over time and where the X axis represents time, the data will at first only be available for the beginning of the range, and then, as time passes, may be added. Thus it is possible that the range of the X axis must be 0 to 800, but the data currently only ranges from 0 to 50 on the X axis. When the data is presented to a viewer dynamically on such a graph, at first the data will only be seen on a portion of the graph.

One solution to this problem is to use a logarithmic scale on the X axis. In this way, the details of the data in the lower portion of the range are more readily visible, and yet the graph can accommodate the full range of data.

However, there are problems with using this logarithmic scale on an axis. First, a viewer may not be accustomed to using such a scale, and comprehensibility of the graph may be affected. Second, the details of the data in the upper portion of the graph will be compressed and this damages the usefulness of such a graph. Third, if it is not known what the final range of data to be displayed will be, the final data may not be displayed in the entire display area (and so detail that could have been displayed will be lost) or the final data may overflow the range displayed (so that data will not be displayed).

Therefore, there is a need for a graphical way to present data over ranges that change over the time of presentation, while allowing the maximum detail in the data presented in the available display area, and accommodating on-the-fly changes in the range of data to be displayed.

### SUMMARY OF THE INVENTION

A graphical presentation of data is made in which the range of possible values for the graph corresponds to the range of actual values being graphed. As the range of values changes over time (increasing or decreasing as data is added or subtracted from the data being graphed), the range of values displayed on the graph changes. The graph may be redrawn dynamically as data is added or subtracted from the graphed data.

In one embodiment, the granularity of the scale is also dynamically adjusted as the range changes, affecting the legend on the graph and/or the reference lines drawn on the graph.

In one embodiment, the graph is continuously redrawn to include the range of data currently being drawn, and so as data is added, but the granularity is changed only periodically. Thus while the data is incrementally changing on the display, the reference lines are not recalculated, aiding in comprehensibility of the graph.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Figure 1 is a block diagram representing an exemplary non-limiting computing system in which the present invention may be implemented;

Figures 2(a) through 2(g) are diagrams representing an exemplary sequence of displays according to one embodiment of the present invention;

Figure 3 is a flow diagram representing a method of implementing associative hash partitioning according to one embodiment of the present invention; and

Figure 4 is a block diagram representing a database system according to one embodiment of the invention.

### DETAILED DESCRIPTION OF ILLUSTRATIVE EMBODIMENTS

### Overview

A graphical presentation of data is made in which the range of possible values for the graph corresponds to the range of actual values being graphed. As the range of values changes over time (increasing or decreasing as data is added or subtracted from the data being graphed), the range of values displayed on the graph changes. The graph may be redrawn dynamically as data is added or subtracted from the graphed data.

In one embodiment, the granularity of the scale is also dynamically adjusted as the range changes, affecting the legend on the graph and/or the reference lines drawn on the graph.

### Exemplary Computing Device

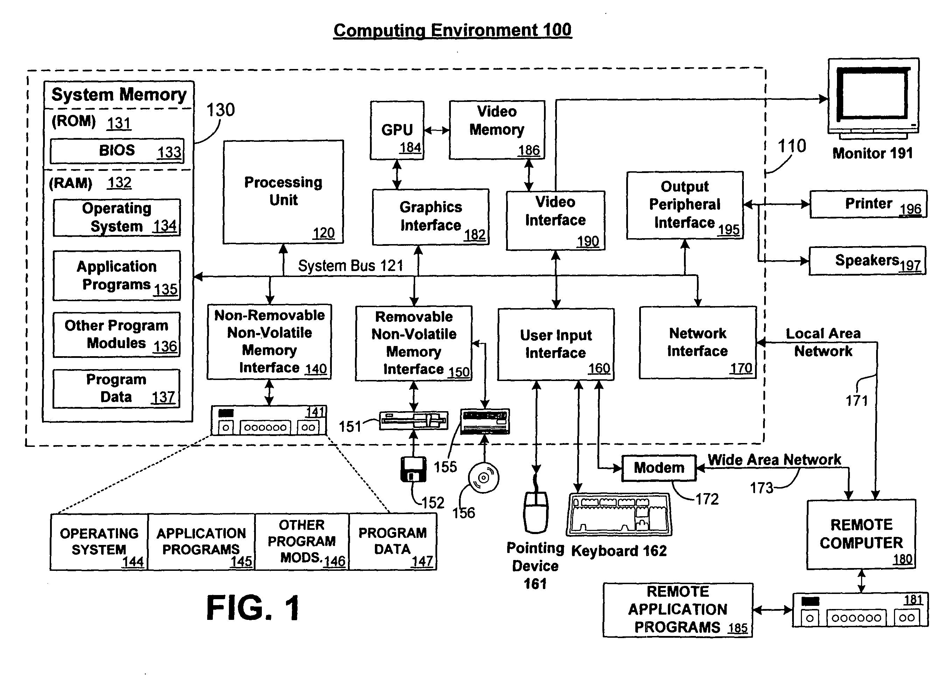

FIG. 1 and the following discussion are intended to provide a brief general description of a suitable computing environment in which the invention may be implemented. It should be understood, however, that handheld, portable and other computing devices and computing objects of all kinds are contemplated for use in connection with the present invention, as described above. Thus, while a general purpose computer is described below, this is but one example, and the present invention may be implemented with other computing devices, such as a thin client having network/bus interoperability and interaction. Thus, the present invention may be implemented in an environment of networked hosted services in which very little or minimal client resources are implicated, e.g., a networked environment in which the client device serves merely as an interface to the network/bus, such as an object placed in an appliance, or other computing devices and objects as well. In essence, anywhere that data may be stored or from which data may be retrieved is a desirable, or suitable, environment for operation according to the invention.

Although not required, the invention can be implemented via an operating system, for use by a developer of services for a device or object, and/or included within application software that operates according to the invention. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer configurations. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like. The invention may also be practiced in distributed computing environments where tasks are performed by remote processing devices that are linked through a communications network/bus or other data transmission medium. In a distributed computing environment, program modules may be located in both local and remote computer storage media including memory storage devices, and client nodes may in turn behave as server nodes.

Fig. 1 thus illustrates an example of a suitable computing system environment 100 in which the invention may be implemented, although as made clear above, the computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

With reference to Fig. 1, an exemplary system for implementing the invention includes a general purpose computing device in the form of a computer system 110. Components of computer system 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer system 110 typically includes a variety of computer readable media. Computer readable media can be any available media that can be accessed by computer system 110 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, Random Access Memory (RAM), Read Only Memory (ROM), Electrically Erasable Programmable Read Only Memory (EEPROM), flash memory or other memory technology, Compact Disk Read Only Memory (CDROM), digital versatile disks (DVD) or other optical disk storage, magnetic cassettes, magnetic tape, magnetic disk storage or other magnetic storage devices, or any other medium which can be used to store the desired information and which can accessed by computer system 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer system 110, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer system 110 may also include other removable/non-removable, volatile/nonvolatile computer storage media. By way of example only, Fig. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1 provide storage of computer readable instructions, data structures, program modules and other data for the computer system 110. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer system 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A graphics interface 182, such as Northbridge, may also be connected to the system bus 121. Northbridge is a chipset that communicates with the CPU, or host processing unit 120, and assumes responsibility for accelerated graphics port (AGP) communications. One or more graphics processing units (GPUs) 184 may communicate with graphics interface 182. In this regard, GPUs 184 generally include on-chip memory storage, such as register storage and GPUs 184 communicate with a video memory 186. GPUs 184, however, are but one example of a coprocessor and thus a variety of coprocessing devices may be included in computer system 110. A monitor 191 or other type of display device is also connected to the system bus 121 via an interface, such as a video interface 190, which may in turn communicate with video memory 186. In addition to monitor 191, computer systems may also include other peripheral output devices such as speakers 197 and printer 196, which may be connected through an output peripheral interface 195.

The computer system 110 may operate in a networked or distributed environment using logical connections to one or more remote computers, such as a remote computer 180. The remote computer 180 may be a personal computer, a server, a router, a network PC, a peer device or other common network node, and typically includes many or all of the elements described above relative to the computer system 110, although only a memory storage device 181 has been illustrated in Fig. 1. The logical connections depicted in Fig. 1 include a local area network (LAN) 171 and a wide area network (WAN) 173, but may also include other networks/buses. Such networking environments are commonplace in homes, offices, enterprise-wide computer networks, intranets and the Internet.

When used in a LAN networking environment, the computer system 110 is connected to the LAN 171 through a network interface or adapter 170. When used in a WAN networking environment, the computer system 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer system 110, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

### Progressive Scale Graph

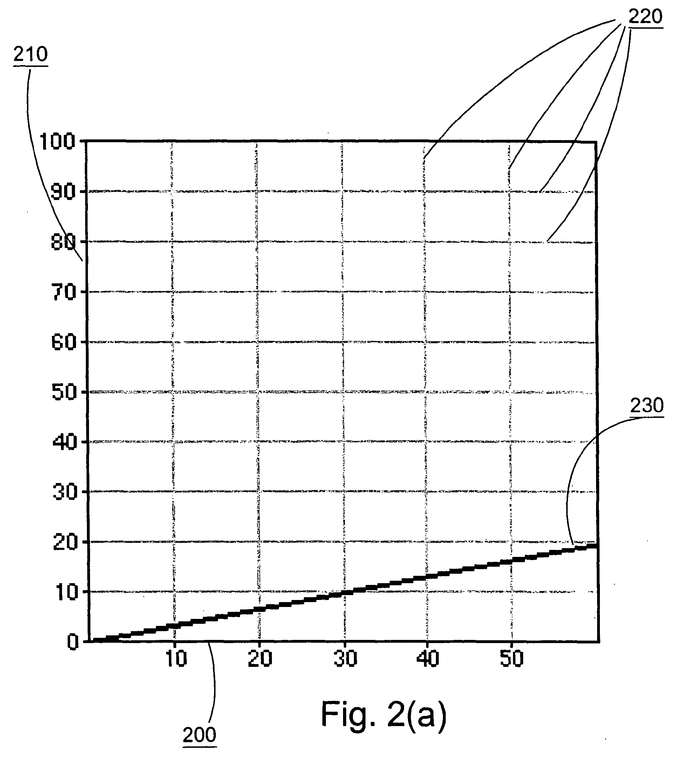

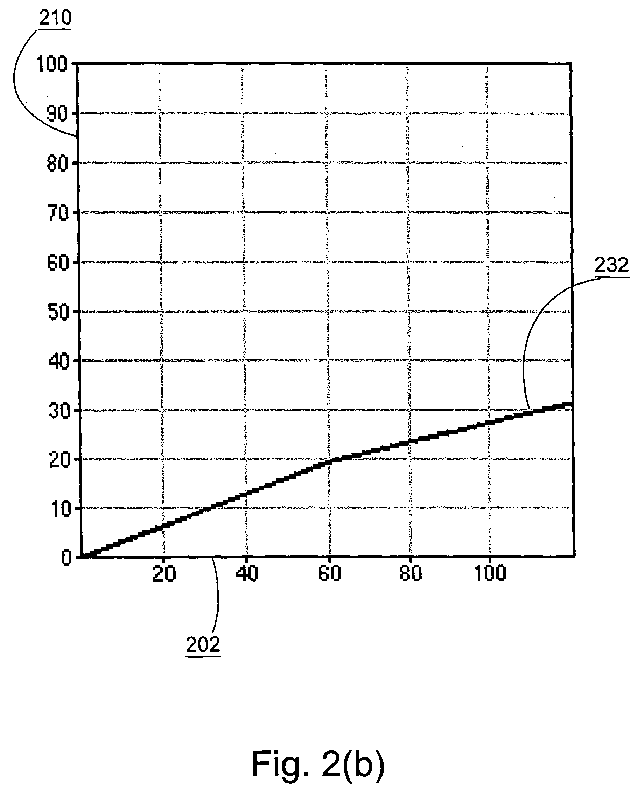

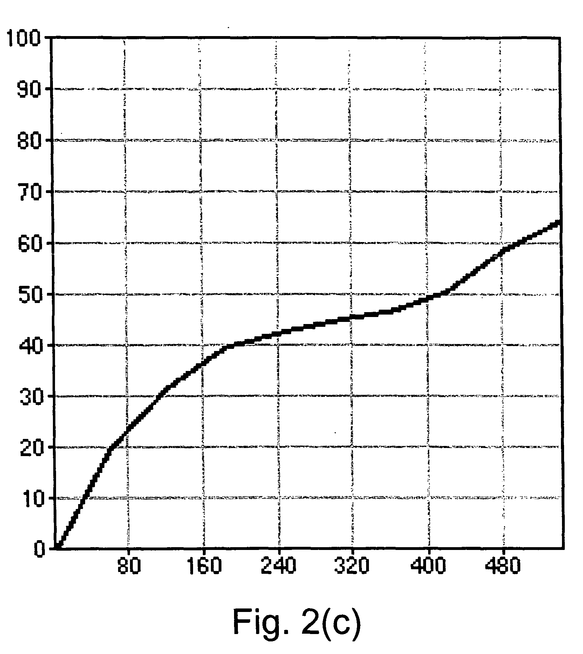

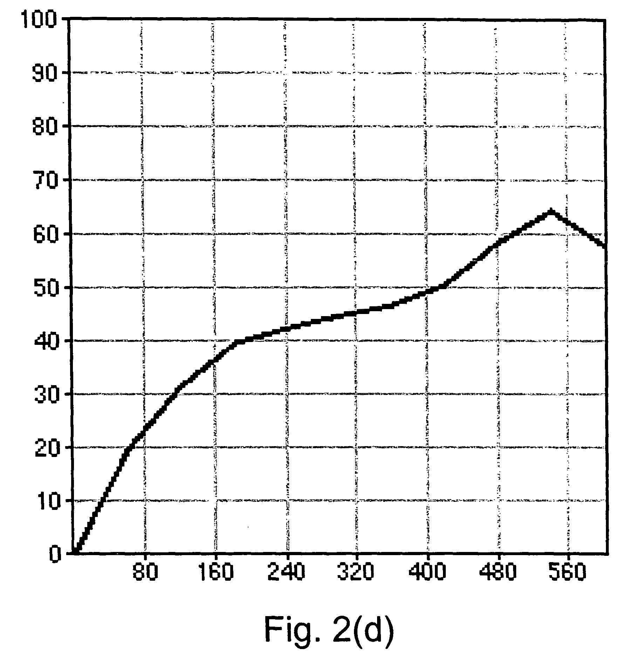

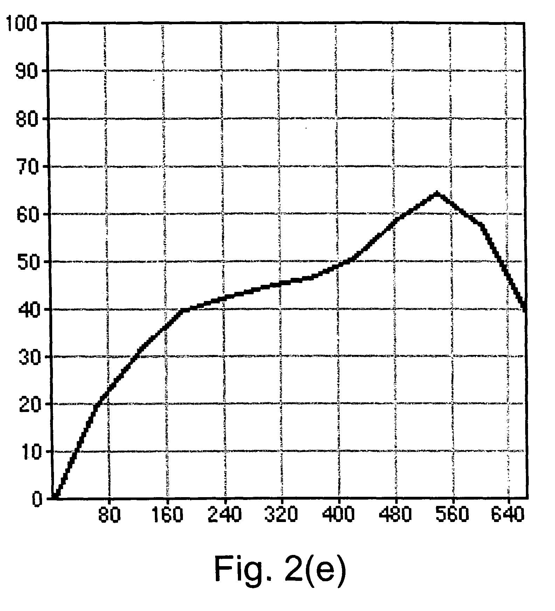

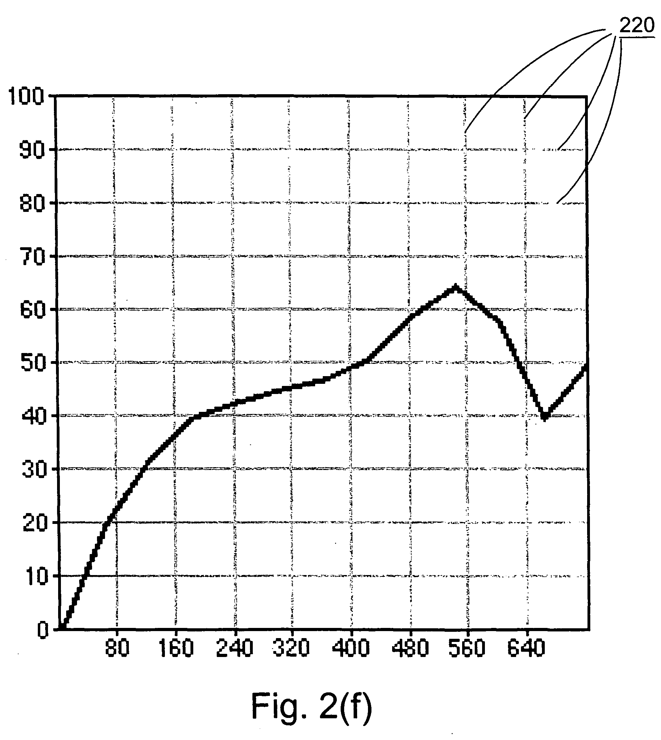

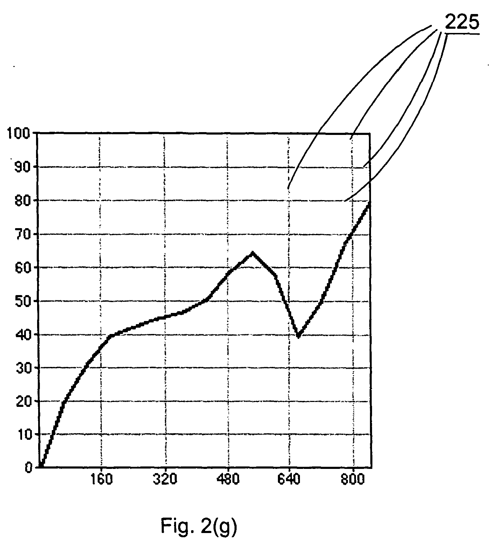

In order to display continuously updated data, for example, continuously updated aggregations of data, a progressive scale graph is provided. In one exemplary embodiment, a graph displaying data from a data set consists of two axes, X and Y. As shown in the exemplary graph of Fig. 2, X axis 200 has a range from 0 to 60, and Y axis 210 has a range from 0 to 100. Other embodiments can include additional axes in the graph. Axes may be depicted in the graphical depiction of the graph, or, in alternate embodiments, may be used to graph data but not shown. Although the exemplary graph of Fig. 2 includes only two axes, a graph of any number of dimensions may be used according to the invention, and the inventive method could be used on one axis or on more axes in any graph according to the invention.

Scale marks can be used to show the range and scale of a graph. Such scale marks can include numbers displayed on or proximate to an axis, hash marks, or grid lines. The exemplary graph of Fig. 2(a) also contains grid lines 220. These grid lines are used to display the range and scale of the graph.

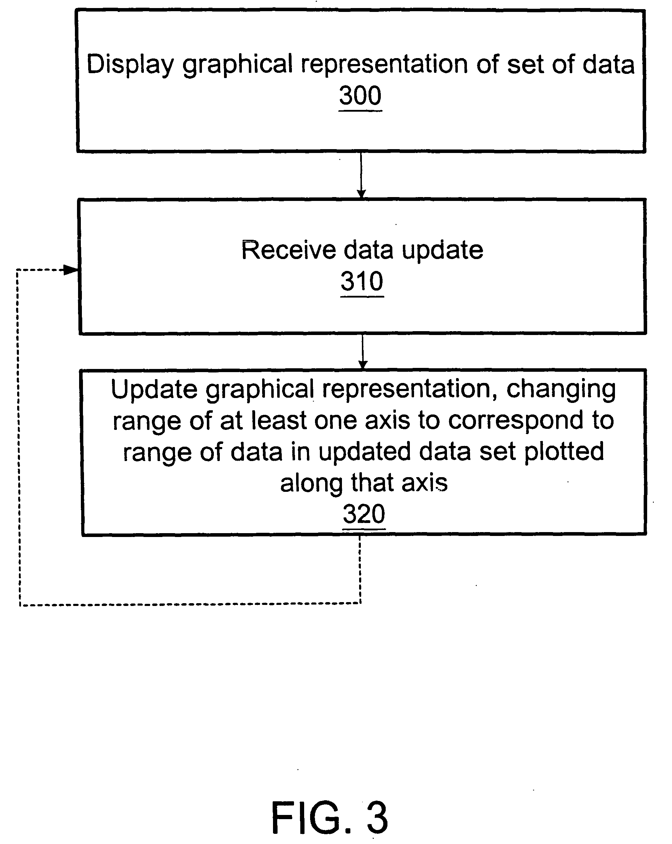

In one embodiment, as shown in Fig. 3, a method is presented for dynamic data presentation on a graph. In a first step 300, a graphical representation is displayed of a set of data plotted using at least two axes. The range of at least one axis corresponds to the range of data values from a set of data. The lowest and highest points included in the range correspond exactly to the range of data values from the set of values in one embodiment. In another embodiment, the lowest point in the range is set lower than the lowest data value on that axis and the highest point is set higher than the highest data value on that axis. The range then approximately corresponds to the range of data values from the set of values, although the two ranges need only correspond and need not exactly match. For example, if the range of values on the dimension plotted on the X axis is 100 through 200, the X axis will be displayed with a range corresponding to that - either 100 through 200. In another example, to enhance viewability or comprehension for data values from 100 through 200, the range for the X axis will be from 90 through 210.

The second step 310 involves receipt of a data update. The data update may be received in realtime as data is being updated or collected. If a series of data updates is being used to show the progression of data, the data update may be stored data corresponding to an increment of time or a data increment in that progression.

Then, in a third step 320, the graphical representation is updated. The range of the axis which had corresponded to the range of data values from the initial set of data is changed. The new range for that axis corresponds to the range of data values plotted on that axis using the data update. Thus, continuing the previous example, if the updated data has a range from 100 through 220, the range for the X axis will now correspond to that new range. In the case where the correspondence of the range of the axis with the range of data values for the axis is direct, the range will be 100 through 220. In one embodiment, the receipt of data updates and new display cycle continues with additional data updates.

The range displayed on any axis may increase or decrease, and it may be that the range is recalculated when data updates require a substantially different range than previously graphed data sets. For example, if the data update shrinks the range of data to be displayed on the axis, but only by 10% of the total range, it may be desirable to leave the axis range the same when displaying the updated axis.

In one embodiment, the data update is a second set of data representing all data to be graphed in step 320. In another embodiment, the data update comprises an incremental change. Thus, if a first set of data is displayed, and a data update is received which is an incremental change to the data, then the new display created in step 320 will be a combination of the first and second sets of data. This incremental change to data may also be removing some data from the first set of data, in which case a subset of the first set of data may be graphed in the new display created in step 320.

In this way, the displayed graph has improved readability. When the graph is displaying progressively updated data, the data desirably fills all or most of the display regardless of the current advance on the X axis.

Again with reference to Fig. 2(a), the graph depicted graphically depicts data in line 230. The data represented by line 230 has a range on the X axis 200 from about 0 to 60. An exemplary updated graphical representation of data is shown in Fig. 2(b). In this updated graphical representation, Y axis 210 remains the same, however, updated X axis 202 now has a range from about 0 to 120, as does the data depicted graphically by line 232. A further update is shown in Fig. 2(c) through Fig. 2(e). In each instance, as the range of the X axis changes, the line depicting the data and the gridlines are redrawn. However, if this continues, the grid lines will be arbitrarily close to each other. Because the graph has been rescaled to the degree that the granularity of visible grid of grid lines becomes cluttered, according to one embodiment of the invention, a change is made to the granularity of the grid lines. The scale ratio still continues to increase. This is shown by another updated graphical representation shown in Fig. 2(f). In this figure, grid lines 220 are drawn spaced 80 units apart on the X axis. Figure 2(g) shows an additional update to the graphical representation which includes grid lines 225 spaced 160 units apart on the X axis. Thus, in one embodiment, by maintaining constant spacing of gridlines for one or more updates, but then occasionally updating the spacing of the gridlines with an update, comprehensibility across updates and readability are each enhanced. Thus, as can be seen in Figs. 2(a) through 2(g), as data is progressively updated, the graph is progressively updated in order to show the complete range of data.

Lines such as line 230 may be used to represent the data on the graph, however, the invention is not limited to this presentation of data on a graph. Other methods of plotting data on a graph of at least two axes, such as showing the data as a collection of points, a surface, or by other means, may also be used with the inventive methods and systems.

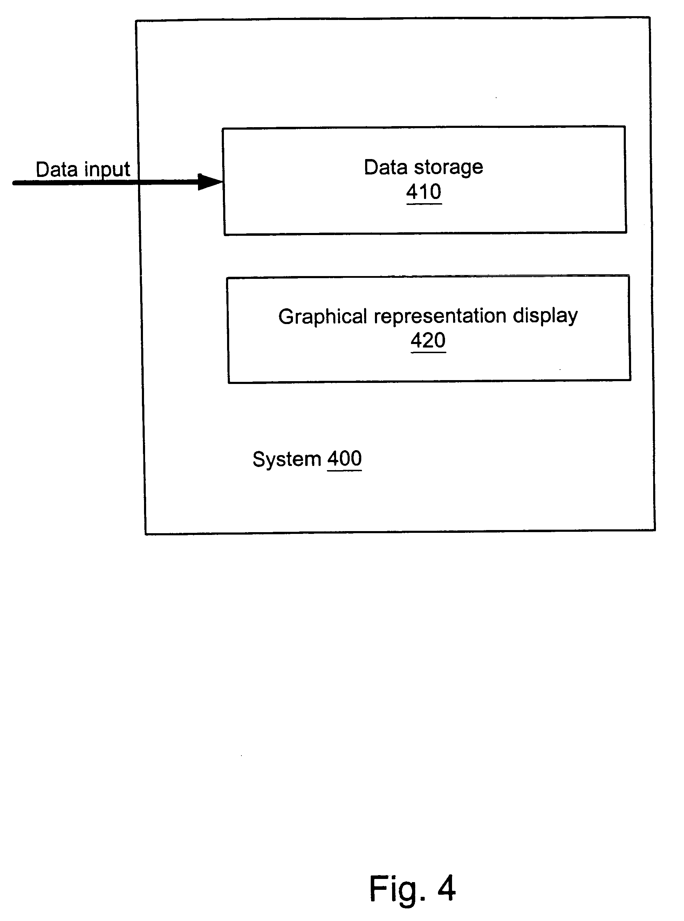

As shown in Figure 4, in one embodiment, a system 400 for dynamic data presentation according to the invention comprises a data storage 410. This data storage is used to store a data set, and also to store at least one update to the data set. The data set and updates may be received from a data processing program or from other application or hardware working operably with a system according to an embodiment of the invention. There may be multiple updates to the data set. A graphical representation display 420 is also included. This graphical representation display 420 is used to displaying a graphical representation of the first set of data, on a graph which includes at least two axes. The range of one of the two axes is set to correspond to the range of values of the data set along that axis. The graphical representation display 420 also displays an updated graphical representation using the first data update, with the range of the first axis now corresponding to the updated data set. As described above, a data update may constitute additions, deletions, or changes to the first data set, or may constitute a complete second set of data to be plotted.

### Conclusion

As mentioned above, while exemplary embodiments of the present invention have been described in connection with various computing devices and network architectures, the underlying concepts may be applied to any computing device or system in which it is desirable to implement graphing of data. Thus, the methods and systems of the present invention may be applied to a variety of applications and devices. While exemplary programming languages, names and examples are chosen herein as representative of various choices, these languages, names and examples are not intended to be limiting. One of ordinary skill in the art will appreciate that there are numerous ways of providing object code that achieves the same, similar or equivalent systems and methods achieved by the invention.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the signal processing services of the present invention, e.g., through the use of a data processing API or the like, are preferably implemented in a high level procedural or object oriented programming language to communicate with a computer. However, the program(s) can be implemented in assembly or machine language, if desired. In any case, the language may be a compiled or interpreted language, and combined with hardware implementations.

While the present invention has been described in connection with the preferred embodiments of the various figures, it is to be understood that other similar embodiments may be used or modifications and additions may be made to the described embodiment for performing the same function of the present invention without deviating therefrom. Furthermore, it should be emphasized that a variety of computer platforms, including handheld device operating systems and other application specific operating systems are contemplated, especially as the number of wireless networked devices continues to proliferate. Therefore, the present invention should not be limited to any single embodiment, but rather should be construed in breadth and scope in accordance with the appended claims.

## Claims

1. A method for dynamic data presentation on a graph comprising the steps of:
displaying a graphical representation of a first set of data plotted using at least two axes, where the first range of at least a first axis from among said axes corresponds to a range of values of said data plotted on said first axis;
receiving a first data update; and
updating said graphical representation a first time using said first data update by changing said first axis to a second range in said updated graphical representation to correspond with a range of data values plotted on said first axis.

2. The method of claim 1, where said step of displaying a graphical representation comprises displaying at least one scale mark on said first axis to indicate the scale of said first axis, where each of said at least one scale mark represents a corresponding reference value on said first axis.

3. The method of claim 2, where said method further comprises:
receiving a second data update; and
updating said graphical representation a second time using said second data update by changing said first axis to a third range in said updated graphical representation to correspond with a range of data values displayed using said first axis and updating said at least one scale mark by updating said corresponding reference value.

4. The method of claim 2, where said step of updating said graphical representation comprises: updating said at least one scale mark by updating said corresponding reference value.

5. The method of claim 2, where said at least one scale mark comprises at least one grid line.

6. The method of claim 2, where said at least one scale mark comprises at least one hash mark.

7. The method of claim 1, further comprising:
receiving a second data update before said receiving of said first data update; and
updating said graphical representation using said second data update using said first range for said first axis.

8. A system for dynamic data presentation on a graph comprising:
data storage for storing a first set of data and a first data update;
graphical representation display for displaying a graphical representation of said first set of data plotted using at least two axes, wherein the first range of at least a first axis from among said axes corresponds to a range of values of said data plotted using said first axis; and for displaying a first updated graphical representation using said first data update, plotted using said at least two axes, where a second range is used for said first axis, said second range corresponding to a range of data values displayed in said first updated graphical representation using said first axis.

9. The system of claim 8, wherein said graphical representation display displays at least one scale mark on said first axis to indicate the scale of said first axis, wherein each of said at least one scale mark represents a corresponding reference value on said first axis.

10. The system of claim 9, where said data storage further stores a second data update, and where said graphical display displays a second updated graphical representation using said second data update, plotted using said at least two axes, where a third range is used for said first axis, said third range corresponding to the range of data values displayed in said second updated graphical representation using said first axis, and where said display of at least one scale mark is updated by updating said corresponding reference value.

11. The system of claim 9, where said display of at least one scale mark is updated by updating said corresponding reference value.

12. The system of claim 9, where said at least one scale mark comprises at least one grid line.

13. The system of claim 9, where said at least one scale mark comprises at least one hash mark.

14. A computer-readable medium for dynamic data presentation on a graph, said computer-readable medium with instructions to perform acts comprising:
displaying a graphical representation of a first set of data plotted using at least two axes, where the first range of at least a first axis from among said axes corresponds to a range of values of said data plotted on said first axis;
receiving a first data update; and
updating said graphical representation a first time using said first data update by changing said first axis to a second range in said updated graphical representation to correspond with a range of data values plotted on said first axis.

15. The computer-readable medium of claim 14, where said displaying a graphical representation comprises displaying at least one scale mark on said first axis to indicate the scale of said first axis, where each of said at least one scale mark represents a corresponding reference value on said first axis.

16. The computer-readable medium of claim 15, where said acts further comprise:
receiving a second data update; and
updating said graphical representation a second time using said second data update by changing said first axis to a third range in said updated graphical representation to correspond with a range of data values displayed using said first axis and updating said at least one scale mark by updating said corresponding reference value.

17. The computer-readable medium of claim 15, where updating said graphical representation comprises: updating said at least one scale mark by updating said corresponding reference value.

18. The computer-readable medium of claim 15, where said at least one scale mark comprises at least one grid line.

19. The computer-readable medium of claim 15, where said at least one scale mark comprises at least one hash mark.

20. The computer-readable medium of claim 14, said acts further comprising:
receiving a second data update before said receiving of said first data update; and
updating said graphical representation using said second data update using said first range for said first axis.
